# EUROPEAN PATENT APPLICATION

(11) **EP 4 664 965 A1**
(43) Date of publication of application: **17.12.2025**
(21) Application number: 23904792.1
(22) Date of filing: 10.10.2023
(51) Int. Cl.: H04W 24/02, H04L 41/082, H04W 48/18, H04W 12/06, H04W 60/04, H04W 76/12, H04W 76/32

(54) **METHOD FOR MANAGING LOCAL NSACF**

(30) Priority: 09.02.2023 US 202363444243 P; 16.03.2023 US 202363452449 P
(71) Applicant: LG ELECTRONICS, INC., Seoul 07336 (KR)
(72) Inventor: The designation of the inventor has not yet been filed
(74) Representative: Maikowski & Ninnemann Patentanwälte Partnerschaft mbB
(86) International application number: PCT/KR2023/015508
(87) International publication number: WO 2024/167091

(57) **Abstract**

One disclosure of the present disclosure provides a method by which a primary NSACF performs communication. The method comprises the steps of: receiving, from a local NSACF, an update request for a network slice; wherein the update request includes ID of a UE, information on the network slice, information on a serving network for the UE and an update flag, requesting, to an UDM, a result of authentication of the UE for the serving network, based on the update request; receiving, from the UDM, a result of authentication of the UE for the serving network; determining whether the update request is trustworthy, based on the received result of authentication; performing NSAC, based on the update request being trustworthy; transmitting, to the local NSACF, a response of the update request, wherein the response of the update request includes a result of the NSAC, based on the update request being trustworthy.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A primary NSACF may manage multiple local NSACFs. At this time, the question is how the primary NSACF will decide whether to trust multiple local NSACFs.

### DESCLOSURE

### TECHNICAL SOLUTION

The primary NSACF determines whether the terminal, serving network, and local NSACF can be trusted through interaction with the UDM.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example 5G system structure to which an implementation of the present specification may be applied.
FIG. 5 shows an example of an increased home control connection.
FIG. 6 shows the procedure for checking and updating the availability of the number of UEs per network slice.
FIG. 7 shows the EAC update procedure.
FIG. 8 shows the procedure for checking and updating the availability of the number of PDU sessions per network slice.
FIG. 9a and FIG. 9b shows a procedure according to the first embodiment of the disclosure of the present specification.
FIG. 10a and FIG. 10b shows a procedure according to the second embodiment of the disclosure of the present specification.
FIG. 11 shows the procedure of the primary NSACF according to the disclosure of the present specification.
FIG. 12 shows the procedure of the UDM according to the disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

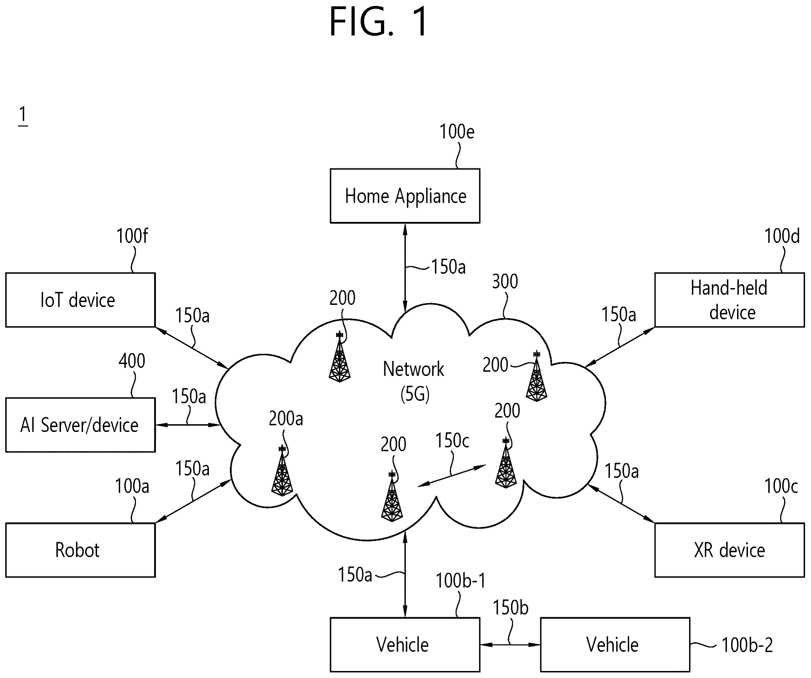

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

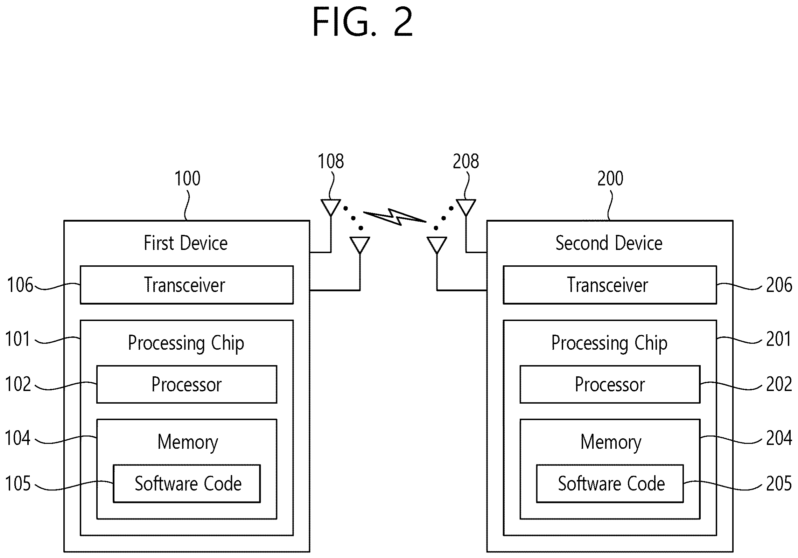

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

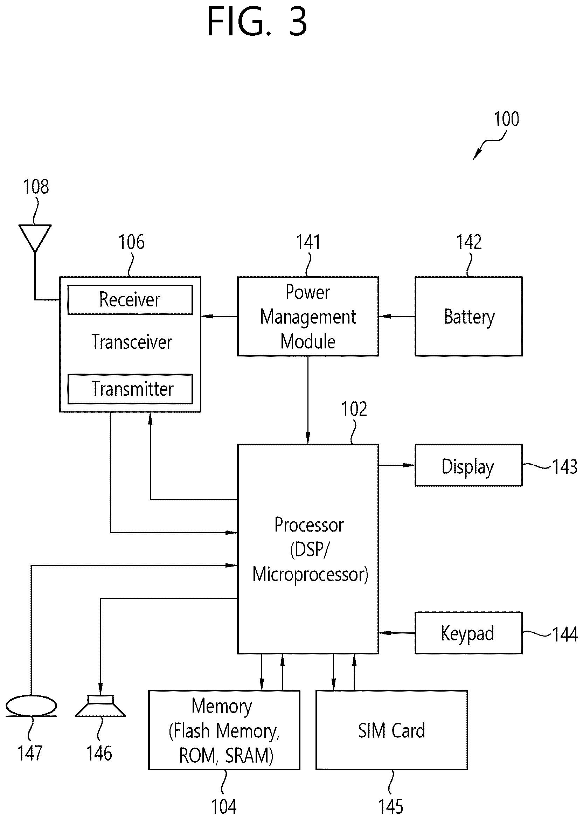

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

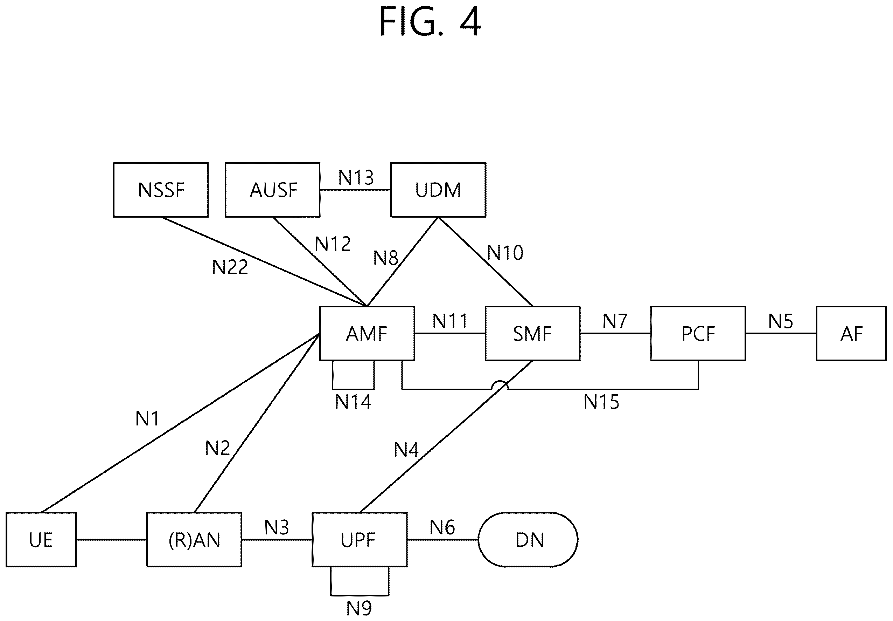

**FIG. 4** **shows an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

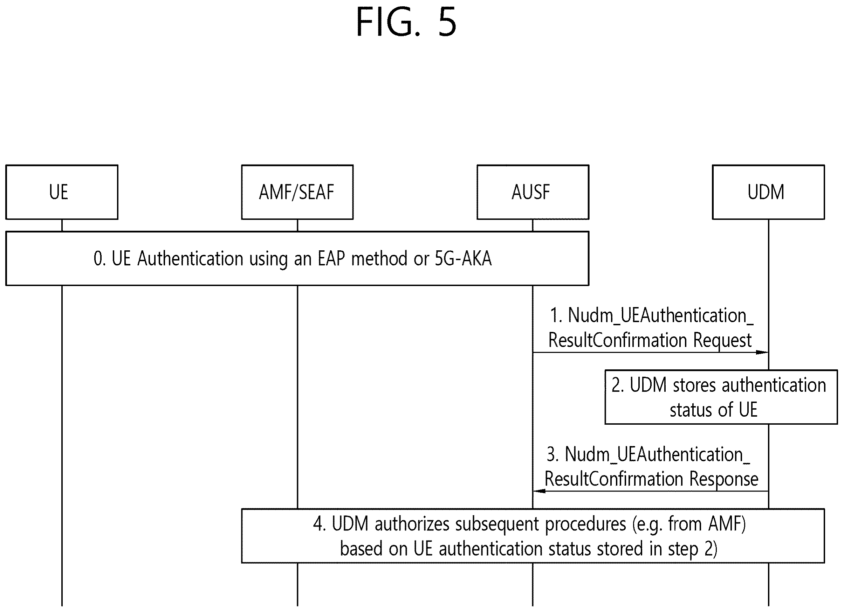

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Primary Authentication>

The purpose of the primary authentication and key agreement procedures is to enable mutual authentication between the UE and the network and provide keying material that can be used between the UE and the serving network in subsequent security procedures. The keying material generated by the primary authentication and key agreement procedure results in an anchor key called the K_{SEA}F provided by the AUSF of the home network to the SEAF of the serving network.

Keys for more than one security context can be derived from the KSEAF without the need of a new authentication run. A concrete example of this is that an authentication run over a 3GPP access network can also provide keys to establish security between the UE and a N3IWF used in untrusted non-3GPP access.

The anchor key K_{SEAF} is derived from an intermediate key called the K_{AUSF}. The K_{AUSF} is established between the UE and HN resulting from the primary authentication procedure. The K_{AUSF} may be securely stored in the AUSF based on the home operator's policy on using such key e.g. if the control plane solution for Steering of Roaming or UE Parameter Update procedures or AKMA are supported by the HPLMN.

NOTE 1: This feature is an optimization that might be useful, for example, when a UE registers to different serving networks for 3GPP-defined access and untrusted non-3GPP access. The details of this feature are operator-specific and not in scope of this document.

Note 2: A subsequent authentication based on the K_{AUSF} stored in the AUSF gives somewhat weaker guarantees than an authentication directly involving the ARPF and the USIM. It is rather comparable to fast re-authentication in EAP-AKA'.

UE and serving network shall support EAP-AKA' and 5G AKA authentication methods.

Note 2b: It is the home operator's decision which authentication method is selected.

The USIM shall reside on a UICC. The UICC may be removable or non-removable.

Note 3: For non-3GPP access networks USIM applies in case of terminal with 3GPP access capabilities.

If the terminal supports 3GPP access capabilities, the credentials used with EAP-AKA' and 5G AKA for non-3GPP access networks shall reside on the UICC.

Upon successful completion of the 5G AKA primary authentication, the AMF shall initiate NAS security mode command procedure with the UE.

### <Linking increased home control>

The 5G authentication and key agreement protocols provide increased home control. Compared to EPS AKA in EPS, this provides better security useful in preventing certain types of fraud as explained in more detail below.

This increased home control comes in the following forms in 5GS:
- In the case of EAP-AKA', the AUSF in the home network obtains confirmation that the UE has been successfully authenticated when the EAP-Response/AKA'-Challenge received by the AUSF has been successfully verified.
- In the case of 5G AKA, the AUSF in the home network obtains confirmation that the UE has been successfully authenticated when the authentication confirmation received by the AUSF in Nausf_UEAuthentication_Authenticate Request message has been successfully verified.

When 3GPP credentials are used in above cases, the result is reported to the UDM.

The feature of increased home control is useful in preventing certain types of fraud, e.g. fraudulent Nudm_UECM_Registration Request for registering the subscriber's serving AMF in UDM that are not actually present in the visited network. But an authentication protocol by itself cannot provide protection against such fraud. The authentication result needs to be linked to subsequent procedures, e.g. the Nudm_UECM_Registration procedure from the AMF in some way to achieve the desired protection.

The actions taken by the home network to link authentication confirmation (or the lack thereof) to subsequent procedures are subject to operator policy and are not standardized.

But informative guidance is given as to what measures an operator could usefully take. Such guidance may help avoiding a proliferation of different solutions.

The feature of increased home control is also used to allow the UDM to keep track of the AUSF that stores the KAUSF to be used during e.g. the control plane solution for Steering of Roaming or UE Parameter Update procedures; i.e. the AUSF that stores the latest K_{AUSF} generated after successful completion of the latest primary authentication reported to the UDM.

After the UDM is informed that the UE has been successfully (re-)authenticated, the UDM shall store the AUSF instance which reported the successful authentication. If the UDM has been previously informed that the UE was authenticated by a different AUSF instance, the UDM may request the old AUSF to clear the stale security parameters (K_{AUSF}, SOR counter and UE parameter update counter). If the UDM determines to delete the security parameters in the old AUSF, then the UDM shall use the Nausf_UEAuthentication_deregister service operation.

**FIG. 5** **shows an example of an increased home control connection.**

The information sent from the AUSF to the UDM that a successful or unsuccessful authentication of a subscriber has occurred, shall be used to link authentication confirmation to subsequent procedures. The AUSF shall send the Nudm_UEAuthentication_ResultConfirmation service operation for this purpose as shown in FIG. 5.
1. The AUSF shall inform UDM about the result and time of an authentication procedure with a UE using a Nudm_UEAuthentication_ResultConfirmation Request. This shall include the SUPI, a timestamp of the authentication, the authentication type (e.g. EAP method or 5G-AKA), and the serving network name.
   NOTE: It may be sufficient for the purposes of fraud prevention to send only information about successful authentications, but this is up to operator policy.
2. The UDM shall store the authentication status of the UE (SUPI, authentication result, timestamp, and the serving network name).
3. UDM shall reply to AUSF with a Nudm_UEAuthentication_ResultConfirmation Response.
4. Upon reception of subsequent UE related procedures (e.g. Nudm_UECM_Registration_Request from AMF) UDM may apply actions according to home operator's policy to detect and achieve protection against certain types of fraud.

This sub-clause gives informative guidance on how a home operator could link authentication confirmation (or the lack thereof) to subsequent Nudm_UECM_Registration procedures from AMF to achieve protection against certain types of fraud, as mentioned in the preceding sub-clause.

### Approach 1:

The home network records the time of the most recent successfully verified authentication confirmation of the subscriber together with the identity of the 5G visited network that was involved in the authentication. When a new Nudm_UECM_Registration Request arrives from a visited network, the home network checks whether there is a sufficiently recent authentication of the subscriber by this visited network. If not, the Nudm_UECM_Registration Request is rejected. The rejection message may include, according to the home networks policy, an indication that the visited network should send a new Nausf_UEAuthentication_Authenticate Request for fetching a new authentication vector before repeating the Nudm_UECM_Registration Request.

Note 1: With this approach, the authentication procedure and the Nudm_UECM_Registration procedure are performed independently. They are coupled only through linking information in the home network.

Note 2: It is up to the home network to set the time threshold to define what 'sufficiently recent' is.

### Approach 2:

As a variant of the above Approach 1, Approach 2 is based on a more fine-grained policy applied by the home network; the home network could classify roaming partners into different categories, depending on the trust - e.g. derived from previous experience placed in them, for example as follows:
- For a visited network in the first category, the home network would require a successful authentication 'immediately preceding' the Nudm_UECM_Registration Request from an AMF.
- For a visited network in the second category, the home network would only check that an authentication in a network visited by the subscriber was sufficiently recent (taking into account that there may have been a security context transfer between the visited networks).
- For a visited network in the third category, the home network would perform no checks regarding Nudm_UECM_Registration Requests and authentication at all.

Further approaches are possible, depending on the home operator's policy.

### < NSAC (Network Slice Admission Control)>

The Network Slice Admission Control Function (NSACF) monitors and controls the number of registered UEs per network slice and/or the number of PDU Sessions per network slice for the network slices that are subject to Network Slice Admission Control (NSAC). The NSACF is configured with the maximum number of UEs and/or the maximum number of PDU Sessions allowed to be served per S-NSSAI subject to NSAC. The NSACF is also configured with information indicating applicable access type(s) for the S-NSSAI (i.e. 3GPP Access Type, Non-3GPP Access Type, or both).

The NSACF also provides event-based Network Slice status notifications and reports to the consumer NFs (e.g. AF).

The NSACF may be responsible for one or more S-NSSAIs. For one S-NSSAI there may be one or multiple NSACFs deployed in a network (a PLMN or a SNPN) as follows:
- If the network is configured with a single service area, there is a single NSACF configured with the maximum number of UEs per network slice and/or the maximum number of PDU Sessions per network slice, which are valid in the network.
- If the network is configured with multiple service areas, an NSACF may be deployed on a service area basis, which can be one NSACF instance or one NSACF Set. There are multiple NSACF architecture options:
   - Option 1: non-Centralized Single tier NSACF architecture. In this architecture, independent NSACFs are deployed in every service area. There is no interaction between the NSACFs deployed in different service area. Each NSACF is configured with the maximum number of UEs per network slice and/or the maximum number of PDU Sessions which are valid in the service area.
   - Option 2: Centralized architecture. In this architecture, a single centralized NSACF is deployed in the network to handle admissions in all service areas. The centralized NSACF is configured with the total number of UEs per network slice and the maximum number of PDU Sessions for the entire PLMN. NSAC Requests from AMF or SMF to the single centralized NSCAF in this case includes the service area of the NF consumer.
      NOTE 1: It is possible to configure in the centralized architecture the maximum number of registered UEs and/or the number of PDU sessions per service area if required by the operator.
   - Option 3: Hierarchical NSACF architecture is deployed in the network. There are two roles of NSACF and interaction between them may be required:
      - Primary NSACF, controls and distributes of the maximum number of UEs and/or the maximum number of PDU Sessions for other NSACF(s) deployed in different service Area. The Primary NSACF handles overall NSAC for an S-NSSAI at the global level (i.e. it is ultimately responsible for the NSAC for an S-NSSAI).
      - NSACF is responsible for one or multiple Service Area. And one Service area is only associated with one NSACF instance or one NSACF Set.

NOTE 2: When multiple NSACFs are deployed, how the maximum number of UEs per network slice and the maximum number of PDU Sessions per network slice is distributed (by OAM for Option 1 and by the primary NSAF for Option 3) among multiple NSACFs, is implementation specific.

NOTE 3: When multiple NSACFs are deployed based on option 1, the UE moves to new service area with a different NSACF, and if the number of UE or PDU Sessions in the target NSACF has reached the maximum number, whether the session continuity can be guaranteed is left to implementation.

Subject to operator policy and national/regional regulations, the AMF may exempt UEs and the SMF may exempt PDU sessions from NSAC when the UE and/or PDU Session is used for Emergency service or for Critical and Priority services (e.g. MCX, MPS).

When the AMF receives a Registration Request for an Emergency Registration, or with a Registration Request with an Establishment Cause indicating a priority service (e.g. MCX, MPS) or when the AMF determines that there is a priority subscription (e.g., MPS, MCX) in the UDM, the AMF may accept the registration request without applying NSAC, i.e. the AMF triggers the NSAC procedure, but the response from the NSACF is ignored at the AMF.

When the SMF receives a PDU Session Establishment Request for an emergency PDU Session or a PDU Session Establishment Request with a priority header, the SMF may accept the PDU Session Establishment Request without applying NSAC, i.e. the SMF triggers the NSAC procedure, but the response from the NSACF is ignored at the SMF.

Alternatively, when NSAC is exempted for the UE and/or PDU Session, the AMF and the SMF skip the corresponding NSAC procedure, i.e. this UE (respectively PDU Session) is not counted towards the maximum number of UEs (respectively PDU Sessions).

The support of NSAC for the S-NSSAI used for onboarding is optional and subject to Onboarding Network operator policies. However, NSAC for S-NSSAI used for onboarding is not applicable to UEs that registered in ON-SNPN with Registration Type "SNPN Onboarding".

### <NSACF procedure>

The Network Slice Admission Control Function procedures are performed for an S-NSSAI which is subject to Network Slice Admission Control (NSAC). If charging needs to be enabled, the NSACF may act as a NF (CTF) and interact with the CHF to support the Event based charging .

The number of UEs per network slice availability check and update procedure is to update (i.e. increase or decrease) the number of UEs registered with an S-NSSAI which is subject to NSAC. The AMF is configured with the information indicating which network slice is subject to NSAC.

### 1. Number of UEs per network slice availability check and update procedure

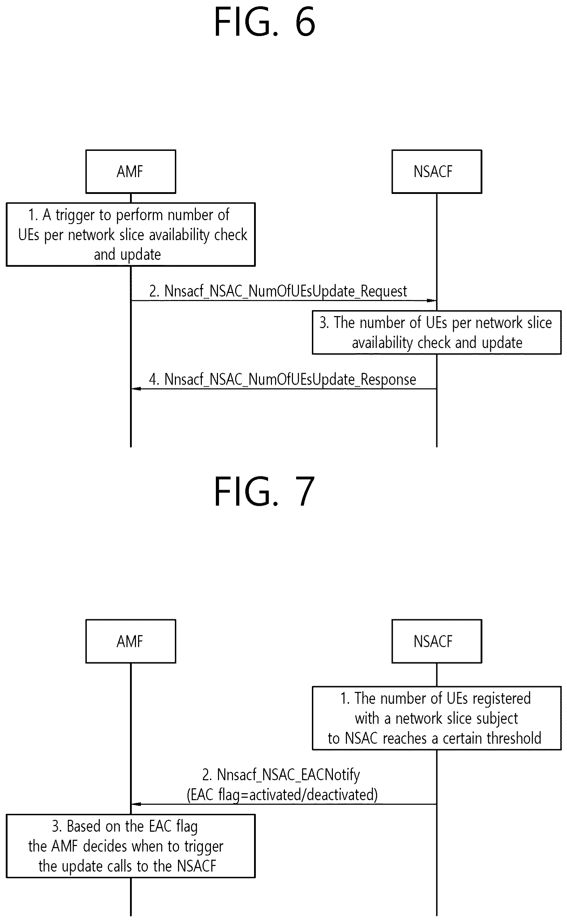

**FIG. 6** **shows the procedure for checking and updating the availability of the number of UEs per network slice.**
1. If the AMF is not aware of which NSACF to communicate, the AMF performs NSACF discovery. The AMF triggers the Number of UEs per network slice availability check and update procedure to update the number of UEs registered with a network slice when a network slice subject to NSAC is included in the Allowed NSSAI (i.e. the AMF requests to register the UE with the S-NSSAI) or removed from the Allowed NSSAI (i.e. the AMF requests to de-register the UE from the S-NSSAI) for a UE. The trigger event at the AMF also includes the change of Allowed NSSAI in case of inter-AMF mobility. The procedure is triggered in the following cases:
   - At UE Registration procedure (including Registration types of Initial Registration or Mobility Registration Update in inter-AMF mobility in CM-CONNECTED or CM-IDLE state):
   - before the Registration Accept in step 21 if the EAC mode is active; or
   - after the Registration Accept message if the EAC mode is not active;
   - At UE Deregistration procedure after the Deregistration procedure is completed;
   - At UE Configuration Update procedure (which may result from NSSAA procedure or subscribed S-NSSAI change):
   - before the UE Configuration Update message if the EAC mode is active and the update flag is to increase; or
   - after the UE Configuration Update message if the EAC mode is active and the update flag is to decrease; or
   - after the UE Configuration Update message if the EAC mode is not active.
   NOTE 1: Depending on the deployment, there may be different NSACF for different S-NSSAI subject to NSAC and hence, during the registration, AMF triggers the Number of UEs per network slice availability check and update procedure to multiple NSACFs.
2. The AMF sends Nnsacf_NSAC_NumOfUEsUpdate_Request message to the NSACF. The AMF includes in the message the UE ID, Access Type to which the Allowed NSSAI is applied, the S-NSSAI(s), the NF ID and the update flag which indicates whether the number of UEs registered with the S-NSSAI(s) is to be increased when the UE has gained registration to network slice(s) subject to NSAC or the number of UEs registered with the S-NSSAI(s) is to be decreased when the UE has deregistered from S-NSSAI(s) or could not renew its registration to an S-NSSAI subject to NSAC.
   If this is the first time to perform NSAC procedure for the S-NSSAI towards the NSACF, the AMF includes notification endpoint for EAC Notification to implicitly subscribe the EAC notification for the S-NSSAI from the NSACF.
3. The NSACF determines whether the Access Type provided by the AMF is configured for the NSAC based on its configuration. If the Access Type is not configured for the NSAC, the NSACF always accepts the request from the AMF without increasing or decreasing the number of UEs. If the Access Type is configured for the NSAC, the NSACF updates the current number of UEs registered for the S-NSSAI, i.e. increases or decrease the number of UEs registered per network slice based on the information provided by the AMF in the update flag parameter.

If the update flag parameter from the AMF indicates increase, the following applies:
- If the UE ID is already in the list of UEs registered with the network slice, the current number of UEs is not increased as the UE has already been counted as registered with the network slice. The NSACF creates a new entry associated with this new update and shall also maintain the old entry associated with previous update. The multiple entries for the same UE ID in the NSACF are differentiated based on the NF ID of the NF sending the update request. The NSACF removes the entry associated with the NF ID upon reception of a request having update flag indicating decrease.

NOTE 2: The use case of having two or more entries in the NSACF for the same UE can happen during (a) inter-AMF mobility when the new AMF request update to the NSACF before the old AMF sends request to deregister the UE; or (b) PDN connections establishment in the EPC when multiple SMF +PGW-Cs (i.e. used for different PDN Connections associated with the same S-NSSAI) send update requests for maximum number of UEs to the NSACF.

NOTE 3: To handle AMF graceful removal, the NSACF can subscribe for unavailability notifications with the AMF (directly or via NRF) and act accordingly, e.g. update the NF ID with the target AMF ID.
- If the UE ID is not in the list of UE IDs registered with the network slice and the maximum number of UEs registered with the network slice has not been reached yet, the NSACF adds the UE ID in the list of UEs registered with the network slice as a new entry associated with this new update and increases the current number of the UEs registered with the network slice. If the UE ID is not in the list of UEs registered with that S-NSSAI and the maximum number of UEs for that S-NSSAI has already been reached, then the NSACF returns a result parameter indicating that the maximum number of UEs registered with the network slice has been reached.

If the update flag parameter from the AMF indicates decrease and if there is only one entry associated with the UE ID, the NSACF removes the UE ID from the list of UEs registered with the network slice for each of the S-NSSAI(s) indicated in the request from the AMF and also the NSACF decreases the number of UEs per network slice that is maintained by the NSACF for each of these network slices. If there are multiple entries associated with the UE ID, the NSACF removes the entry associated with the NF ID but the UE ID is kept in the list of UEs registered with the S-NSSAI.

The NSACF takes access type into account for increasing and decreasing the number of UEs per network slice.

The NSACF stores the notification endpoint for EAC Notification associated with the S-NSSAI if it is received from the AMF. The NSACF can use this AMF notification endpoint to update the EAC mode.

NOTE 4: This enables the NSACF to maintain up-to-date information about the AMFs serving the S-NSSAIs.

4. The NSACF returns the Nnsacf_NSAC_NumOfUEsUpdate_Response message including Result indication per S-NSSAI. The Result indication includes either 'maximum number of UEs registered with the network slice reached' or 'maximum number of UEs registered with the network slice not reached'.

At UE Registration procedure, if only some of the S-NSSAIs reached the maximum number of UEs per S-NSSAI, the AMF sends a Registration Accept message to the UE in which the AMF includes the rejected S-NSSAI(s) in the rejected NSSAI list for which the NSACF has indicated that the maximum number of UEs per network slice has been reached and for each rejected S-NSSAI the AMF includes a reject cause set to 'maximum number of UEs per network slice reached' and optionally a back-off timer.

When for all the Requested S-NSSAI(s) provided in step 2 the NSACF returned the maximum number of UEs per network slice has been reached and if one or more subscribed S-NSSAIs are marked as default in the subscription data and not subject to NSAC, the AMF can decide to include these Default Subscribed S-NSSAIs in the Allowed NSSAI. Otherwise, the AMF rejects the UE request for registration. In the Registration Reject message, the AMF includes the rejected S-NSSAI(s) in the rejected NSSAI parameter and for each rejected S-NSSAI the AMF includes a reject cause to indicate that the maximum number of UEs per network slice has been reached and optionally a back-off timer.

NOTE 5: If the use case requires the UE to remain reachable at all times with at least one slice, it is recommended that at least one of the Subscribed S-NSSAIs is marked as the default S-NSSAI which is not subject to NSAC. This will ensure the UE is able to access to services even when maximum number of UEs per network slice has been reached.

### 2. Configuration for Early Admission Control (EAC) update procedure

The configuration for Early Admission Control (EAC) update procedure indicates to the AMF the activation or the deactivation of the EAC mode for the S-NSSAI subject to NSAC. EAC mode means that the AMF is required to perform the number of UEs per network slice availability check and update procedure before the S-NSSAI subject to NSAC is included in the Allowed NSSAI and sent to the UE. EAC mode is only applicable in the AMF when the update flag is set to increase.

The AMF implicitly subscribes to the EAC notification for the S-NSSAI when it performs the first network slice availability check and update procedure for the S-NSSAI with the NSACF. The NSACF sends the EAC mode notification towards all notification endpoints associated with the S-NSSAI.

**FIG. 7** **shows the EAC update procedure.**
1. The number of UEs registered with a network slice subject to NSAC crosses a certain operator defined threshold. The NSACF determines whether to activate or deactivate the EAC mode.
2. The NSACF triggers Nnsacf_NSAC_EACNotify operation including the S-NSSAI(s) for which the EAC mode is to be activated or deactivated and a EAC flag(s) set to activated if the number of UEs registered with the network slice is above certain threshold or set to deactivated if the number of the UEs registered with the network slice is below certain threshold which may be same or different with respect to the activation threshold.
   NOTE 1: When the operator set the EAC inactive threshold, the Denial-of-Service issue due to a potential burst of registration request needs to be taken into account.
3. The AMF uses the EAC flag to decide when to trigger the number of UEs per network slice availability check and update procedure so that delays to the registration procedure and impact to the already allowed network slices are avoided.

If the EAC flag indicates EAC mode activated, the AMF triggers the number of UEs per network slice availability check and update procedure before the Registration Accept step of the registration procedure or before the UE Configuration Update message.

If the EAC flag indicates EAC mode deactivated, the AMF triggers the number of UEs per network slice availability check and update procedure after Registration Accept step of the registration procedure or after the UE Configuration Update.

NOTE 2: When the S-NSSAI subject to NSAC and NSSAA, with EAC mode activated or deactivated, the AMF performs them as described in the Verify and update availability of number of UEs per network slice procedure.

### 3. Number of PDU Sessions per network slice availability check and update procedure

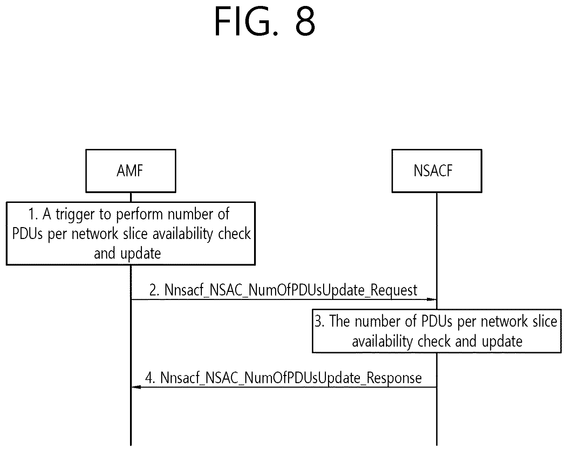

**FIG. 8** **shows the procedure for checking and updating the availability of the number of PDU sessions per network slice.**

The number of PDU Sessions per network slice availability check and update procedure is to update (i.e. increase or decrease) the number of PDU Sessions established on S-NSSAI which is subject to NSAC. The SMF is configured with the information indicating which network slice is subject to NSAC.

NOTE 1: EAC mode is not applicable for Number of PDU Sessions per network slice availability check and update procedure.
1. If the SMF is not aware of which NSACF to communicate, the SMF performs NSACF discovery. The SMF anchoring the PDU session triggers the Number of PDU Sessions per network slice availability check and update procedure for the network slices that are subject to NSAC at the beginning of a PDU Session Establishment procedure only for new PDU Sessions to be established and as a last step of successful PDU Session Release procedure.
   NOTE 2: SMFs handling PDU sessions associated with UE Request Type "Existing PDU Session" for intra access handover purposes do not interact with the NSACF.
2. The SMF anchoring the PDU session sends Nnsacf_NSAC_NumOfPDUsUpdate_Request message to the NSACF. The SMF includes in the message the UE-ID, the PDU session ID, S-NSSAI for which the number of PDU Sessions per network slice update is required, Access Type and the update flag. The update flag may include one of the following values:
   - 'increase' which indicates that the number of PDUs established on the S-NSSAI is to be increased when the procedure is triggered at the beginning of PDU Session Establishment procedure or when a new user plane leg is to be established for an MA PDU Session;
   - 'decrease' which indicates that the number of PDU Sessions on the S-NSSAI is to be decreased when the procedure is triggered at the end of PDU Sessions Release procedure or when an existing user plane leg is to be released for an MA PDU Session; or
   - 'update' which indicates that for existing PDU Session the Access Type is to be replaced with a new Access Type during inter access mobility.

NOTE 3: For SSC mode 3 PDU session, the SMF of the new PDU Session invokes the NSACF to increase the number of PDU Session and adds the new PDU session ID in the NSACF. When the old PDU session is released the SMF of the old PDU session invokes the NSACF to decrease the number of PDU Session and remove the old PDU session ID in the NSACF.

NOTE 4: An SMF anchoring an IPv6 Multi-homed PDU session does not invoke NSACF for an S-NSSAI subject to NSAC when the PDU session replaces an existing anchor.

3. The NSACF updates the current number of PDU Sessions established on the S-NSSAI, i.e. increase or decrease the number of PDU Sessions per network slice based on the information provided by the anchor SMF in the update flag parameter.

If the update flag parameter from the SMF anchoring the PDU session indicates increase value and the maximum number of PDU Sessions established on the S-NSSAI has already been reached, then the NSACF returns a result parameter indicating that the maximum number of PDU Sessions per network slice has been reached. If the maximum number of PDU Sessions established on the S-NSSAI has not been reached, the NSACF checks the UE ID. If the UE ID is located, the NSACF, stores the PDU Session ID and the Access Type and increases the number of PDU Sessions for that S-NSSAI. If the NSACF did not locate the UE ID, it creates an entry for the UE ID, stores the PDU Session ID and Access Type and increases the number of PDU Sessions for that S-NSSAI.

If the update flag parameter from the SMF anchoring the PDU session indicates decrease value, the current number of PDU Sessions per S-NSSAI, the NSACF locates the UE ID and decreases the number of PDU Sessions for that S-NSSAI and its related PDU Session ID. If the UE ID has no more PDU sessions, after the decrease, the NSACF removes the UE ID entry.

If the update flag parameter from the SMF anchoring the PDU session indicates update value, the NSACF locates the existing entry with UE ID and PDU Session ID and replaces the Access Type in the existing entry.

The NSACF takes the Access Type parameter into account for increasing and decreasing the number of PDU Sessions per S-NSSAI. For MA PDU Session, if the SMF received information that the UE is registered over both accesses, the SMF provides multiple Access Types to the NSACF. If the NSACF receives a request containing multiple Access Types, the NSACF provides a Result indication for each Access Type.

4. The NSACF acknowledges the update to the anchor SMF with Nnsacf_NSAC_NumOfPDUsUpdate_Response message including a Result indication. If the NSACF returns a Result indication including 'maximum number of PDU Sessions per S-NSSAI reached', the SMF rejects the PDU Session establishment request with reject cause set to 'maximum number of PDU Sessions per S-NSSAI reached' and optionally a back-off timer and the Access Type.

For MA PDU Session, the NSACF may accept the MA PDU Session and may provide to the SMF a Result indicating 'maximum number of PDU Sessions per S-NSSAI reached' or 'maximum number of PDU Sessions per S-NSSAI not reached' associated with an Access Type. If the NSACF indicates a failure that is associated with the Access Type over which the UE sent the MA PDU Session Establishment Request, the SMF sends to the UE a PDU Session Establishment Reject with a Result indication including 'maximum number of PDU Sessions per S-NSSAI reached' ,optionally a back-off timer and the Access Type. When the SMF rejects the MA PDU Session, the SMF sets the Access Type parameter as follows:
- If the UE is registered via both accesses and:
- If the NSACF indicates failure for both accesses, the Access Type indicates both accesses;
- If the NSACF indicates failure for the access over which the MA PDU Session Establishment Request is received, the Access Type indicates the access over which the MA PDU Session Request is received.

NOTE 5: If the UE is registered in both accesses and the NSACF indicates failure for the access different from the access over which the MA PDU Session Establishment Request is received, the SMF accepts the MA PDU Session Request and does not provide back-off timer to the UE.
- If the UE is registered via a single access, the Access Type indicates the access over which the MA PDU Session Request is received.

If the UE receives back-off timer, the UE shall not request the establishment of user-plane resources on the restricted Access Type until the back-off timer expires. The UE may request a PDU Session via the Access Type which is not restricted.

In the case of a PDU Session Establishment failure, the anchor SMF triggers another request to the NSACF with the update flag parameter equal to decrease in order to readjust back the PDU Session counter in the NSACF.

### 4. NSAC Support for Roaming

### 1) Network Slice Admission Control Support for Roaming by VPLMN

For NSAC for roaming UEs, a maximum number of allowed UEs per mapped S-NSSAI in HPLMN and/or a maximum number of allowed PDU Sessions in LBO mode per mapped S-NSSAI in HPLMN is allocated to the VPLMN for each S-NSSAI in HPLMN and stored in one NSCAF in the VPLMN responsible for NSAC for the S-NSSAI in the HPLMN, subject to NSAC.

The maximum number of UEs registered with a network slice monitoring and enforcement is done in the VPLMN by the NSACF in the VPLMN as per the description in FIG. 6 with the following differences:
- Step 2, in the Nnsacf_NSAC_NumOfUEsUpdate_Request service operation the AMF provides both the S-NSSAI in VPLMN and the corresponding mapped S-NSSAI in HPLMN to the NSACF in the VPLMN.
- Step 3, the NSACF in the VPLMN performs NSAC for both the S-NSSAI in VPLMN and the corresponding mapped S-NSSAI in HPLMN based on the SLA between VPLMN and HPLMN.

For LBO, enforcement of the maximum number of PDU Sessions established for an S-NSSAI is performed in the VPLMN by the NSACF in the VPLMN as per the description in FIG. 8 with the following differences:
- Step 2, in the Nnsacf_NSAC_NumOfPDUsUpdate_Request service operation the V-SMF provides both the S-NSSAI in VPLMN and the corresponding mapped S-NSSAI in HPLMN to the NSACF in the VPLMN.
- Step 3, the NSACF in the VPLMN performs NSAC for both the S-NSSAI in VPLMN and the corresponding mapped S-NSSAI in HPLMN based on the SLA between VPLMN and HPLMN.

### 2) Network Slice Admission Control Support for Roaming by HPLMN

For PDU sessions in the home-routed roaming case, the SMF in HPLMN performs NSAC for the S-NSSAI(s) subject to NSAC.

### <Disclosure of the present specification>

Network Slice Admission Control (NSAC) is a technology that monitors and manages information such as the number of terminals registered in a 5G system per network slice and the number of PDU sessions allocated per network slice. A Network Slice Admission Control Function (NSACF) plays this role within a 5G system and may set the maximum number of UEs per network slice and the maximum number of PDU sessions per network slice. Depending on the operation, multiple NSACFs may be deployed. In this case, the multiple NSACFs may have a hierarchical structure so that the Primary/Centralized NSACF can collect information from the multiple NSACFs and monitor or manage them globally.

In addition, the Primary/Centralized NSACF and the NSACFs in the lower layer may be deployed across different PLMNs. In this case, the communication between NSACFs in different PLMNs shall be trusted. Discussions are ongoing in Rel-18 to support enhanced NSAC to provide a reliable way to do this. When the Primary/Centralized NSACF and Local/Distributed NSACF are deployed in different PLMNs, it is proposed in this specification that the VPLMN may be trusted to handle the update information of NSACFs between different PLMNs based on the Primary Authentication result information of the terminal.

In this specification, a primary NSACF may manage multiple local NSACFs.

Among the features introduced in Rel-18 to support enhanced Network Slice Admission Control (NSAC), enhanced network control over UE behavior and consideration of multiple NSACs were introduced. In both cases, the purpose is to control the number of terminal or PDU sessions within an allocated maximum number. However, there are potential denial of service (DoS) issues due to this feature. For example, an NSACF on the VPLMN may determine that the number of PDU sessions or terminals registered on the network slice needs to be updated. And, authentication issue may occur when it passes a message to the NSACF on the HPLMN. Also, terminals that are not using the network slice might be counted toward the quota.

In a roaming scenario, the information reported by the NSACF in the VPLMN may not be trusted by the NSACF in the HPLMN. For example, an NSACF in a less secure region within the VPLMN may send a fake number of registered UE/PDU sessions to easily reach the maximum number and then be reassigned more maximum sessions. Then, other regions that are relatively lightly loaded may experience service impact.

To solve these issues, it is necessary to increase trust in the VPLMN (i.e., the serving network) by utilizing the Linking increased home control method. The present specification may propose a method for determining whether the updated information in the NSACF of the VPLMN is trustworthy based on the results of the existing primary authentication of the terminal by utilizing the linking increased home control method.

To solve the problem, a method, which makes the primary/centralized NSACF of the HPLMN be able to trust the updated information sent by the local or distributed NSACF residing in the VPLMN by utilizing the Linking increased home control feature.

Linking increased home control is a technique that allows the Primary Authentication results and records of the terminal to be utilized in subsequent procedures. The present specification may propose how Link increased home control can be applied to Network Slice Admission Control (NSAC) in roaming scenarios. This is described later.

The NSAC procedure may be divided into the management of the number of registered terminals per network slice and the management of the number of PDU sessions established per network slice.

### 1. First embodiment: Managing the number of registered terminals per network slice

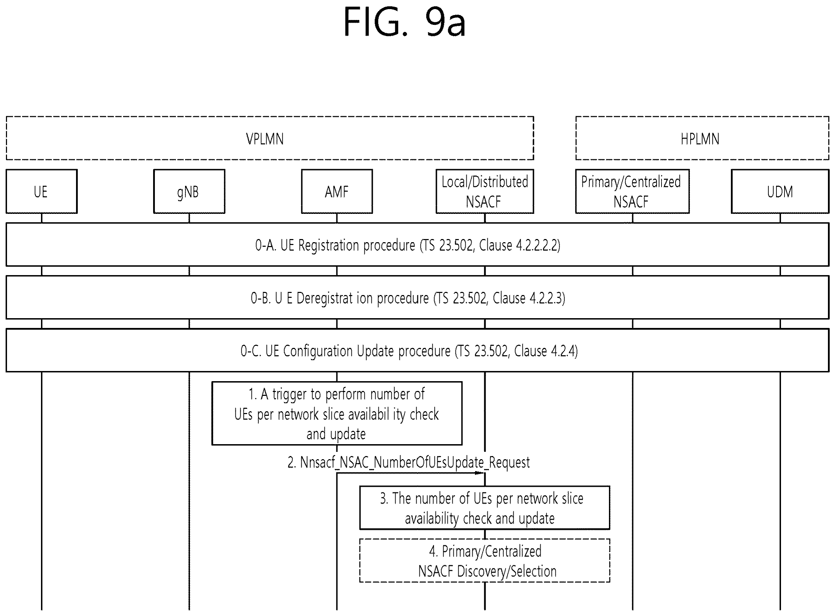

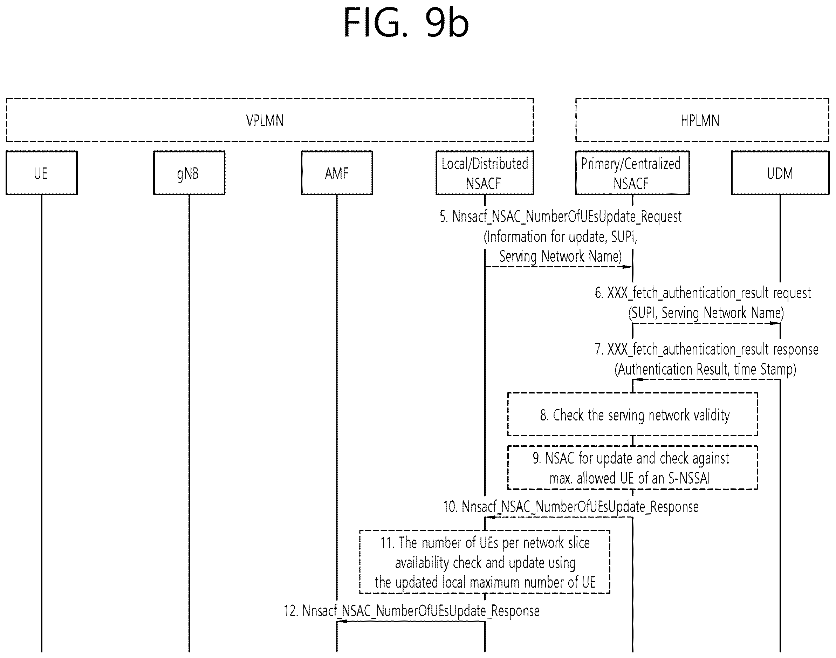

**FIG. 9a** **and** **FIG. 9b** **shows a procedure according to the first embodiment of the disclosure of the present specification.**

FIG. 9a and FIG. 9b illustrate an example NSAC procedure for a terminal with a Link increased home control in a roaming scenario.

0. The NSAC procedure to update the number of registered terminals per network slice may be initiated by an AMF in cases a-c. The AMF may be the AMF of the network serving the terminal.

0-A. During the UE registration process, such as the initial registration of the terminal, the AMF may perform the NSAC procedure according to step 1 after sending a Registration Accept message to the terminal. If the Early Admission control mode (EAC mode) is enabled, the NSAC procedure may be performed before the Registration Accept message is processed.

0-B. In the UE Deregistration procedure, the NSAC procedure may be performed according to step 1 after the procedure is finalized.

0-C. When the UE configuration update procedure is performed due to a result of the Network Slice-Specific Authentication and Authorization (NSSAA) procedure or due to the subscribed S-NSSAI changes, the NSAC procedure may be performed according to step 1.
1. The AMF residing in the VPLMN may verify the availability of the number of registered terminals per network slice. After verification, if the AMF determines that an update is required for the network slice subject to NSAC, the AMF may attempt to update the number of registered terminals on the network slice.
2. the AMF may send a Nnsacf_NSAC_NumOfUEsUpdate_Request message to the local/distributed NSACF. The Nnsacf_NSAC_NumOfUEsUpdate_Request message may contain the UE ID, Serving AMF information, Access Type, S-NSSAI, and an update flag indicating whether to increase or decrease the number of terminals registered in the S-NSSAI.
3. The local/distributed NSACF may perform NSAC (network slice admission control) on the received S-NSSAI.

### 3-1. When the update flag is 'increase'

If the number of terminals registered for the above S-NSSAI has not yet reached the local maximum number of UEs, the rest of the following procedures may be omitted. The AMF may only authorize the registration of as many UEs as the local maximum number of UEs with respect to the S-NSSAI.

If the number of terminals registered in the S-NSSAI has reached the local maximum number of UEs, the local/distributed NSACF may perform NSAC by interacting with the Primary/Centralized NSACF as described later.

### 3-2. When the update flag is 'decrease'

If the local/distributed NSACF does not store any UE entries that need to be deleted, the local/distributed NSACF may interact with the Primary/Centralized NSACF through the following steps.

For example, if NSAC is triggered by a UE deregistration procedure, the AMF may send, to the local/distributed NSACF, an update flag to reduce the number of terminals registered in the corresponding S-NSSAI. However, if the local/distributed NSACF does not have information about the terminal, the local/distributed NSACF may interact with the Primary/Centralized NSACF in a later step to update the UE entry.

4. If the local/distributed NSACF does not have information about the Primary/Centralized NSACF with which it previously interacted, it may find its instance through the NRF or local configuration. The local/distributed NSACF may find the primary/centralized NSACF based on the NRF or local configuration.

5. the local/distributed NSACF may send a Nnsacf_NSAC_NumberOfUEsUpdate Request to the Primary/Centralized NSACF. The Local/Distributed NSACF may send, to the Primary/Centralized NSACF, the Nnsacf_NSAC_NumberOfUEsUpdate Request received (in step 2) from the AMF.

The Local/Distributed NSACF may additionally include the SUPI, the serving network name or information (e.g. PLMN ID, SNPN ID) that identifies the serving PLMN (Public Land Mobile Network), and terminal location information (e.g. AMF ID, etc.) in the Nnsacf_NSAC_NumberOfUEsUpdate Request.

6. the primary/centralized NSACF may request, to the UDM, a record of the terminal's recent authentication to the serving network.

The Primary/Centralized NSACF may find the UDM instance through the NRF or through local configuration. The Primary/Centralized NSACF may then send, to the UDM, the SUPI (and/or the UE's identity), the serving network name or information that identifies the serving PLMN (e.g., PLMN ID, SNPN ID), and the terminal location information (e.g., AMF ID, etc.) that it received to request the terminal's recent authentication history to the corresponding serving network.

7. If there is a matching serving network, the UDM may send the authentication result and time stamp of the terminal to the Primary/Centralized NSACF.

Primary Authentication may be performed during the device's registration process. As soon as the Primary Authentication is completed, the UDM may store the authentication results and records for the terminal.

The time stamp may be information about when the terminal completed the authentication process.

8. the Primary/Centralized NSACF may verify the validity of the serving network. The Primary/Centralized NSACF may verify the validity (or trustworthiness) of the Nnsacf_NSAC_NumberOfUEsUpdate Request. The validity (or trustworthiness) of the Nnsacf_NSAC_NumberOfUEsUpdate Request may be the validity (or trustworthiness) of the serving network Local/Distributed NSACF and/or the UE.

The Primary/Centralized NSACF may determine whether to consider the serving network as a trusted serving network based on the information obtained from the UDM. The judgment criteria may be set differently for each operator. (e.g., if the serving network has an authentication history of 10 minutes before or within 10 minutes, it is considered a trusted network / valid request)

The validity of the serving network may be related to whether the VPLMN is trusted, whether the Local/Distributed NSACF is trusted, or whether the terminal is trusted.

The Primary/Centralized NSACF may verify whether the terminal has registered with the VPLMN based on the information obtained from the UDM, and may determine whether the terminal is trusted based on the verification result.

If it is determined to be an untrusted serving network/invalid request, step 9 may be omitted and step 10 may be performed.

9. Based on the S-NSSAI received in step 5, the Primary/Centralized NSACF may perform NSAC.

The Primary/Centralized NSACF may increase or decrease the local maximum number of UEs through the NSAC process.

### 10. the Primary/Centralized NSACF may send

Nnsacf_NSAC_NumberOfUEsUpdate_response to the Local/Distributed NSACF.

If the local maximum number of UEs has been increased by the Primary/Centralized NSACF, the Primary/Centralized NSACF may send a response to the Local/Distributed NSACF with the updated information. If necessary, the Primary/Centralized NSACF may update the quota of the local/distributed NSACF.

If the serving network is determined to be an untrusted serving network in step 8, the Primary/Centralized NSACF may include the reason of untrusted serving network/invalid request in the response message to the Local/Distributed NSACF. In this case, the Primary/Centralized NSACF may not update the quota of the Local/Distributed NSACF.

11. Based on the information received, the Local/Distributed NSACF may determine if updates to the stored UE entry are required.

The Local/Distributed NSACF may send the Nnsacf_NSAC_NumOfUEsUpdate_Response message to the AMF.

### 2. Second embodiment: Managing the number of PDU sessions per network slice.

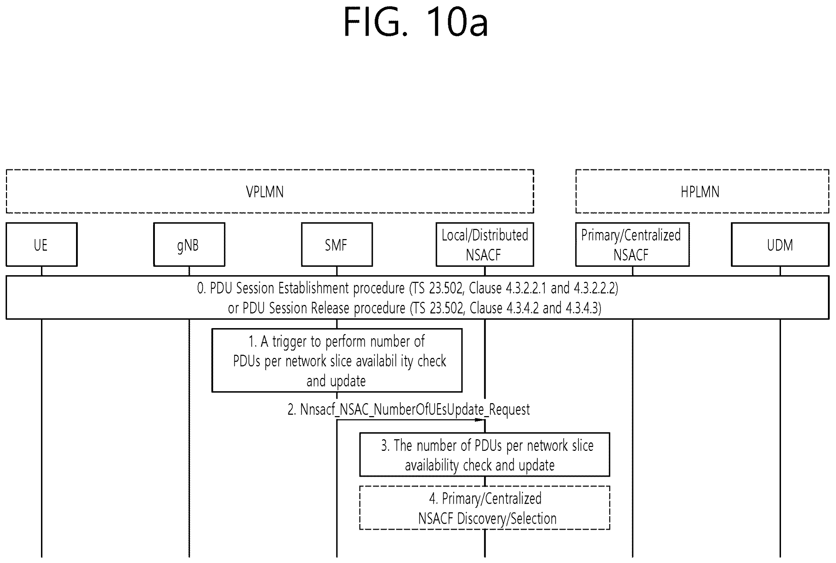

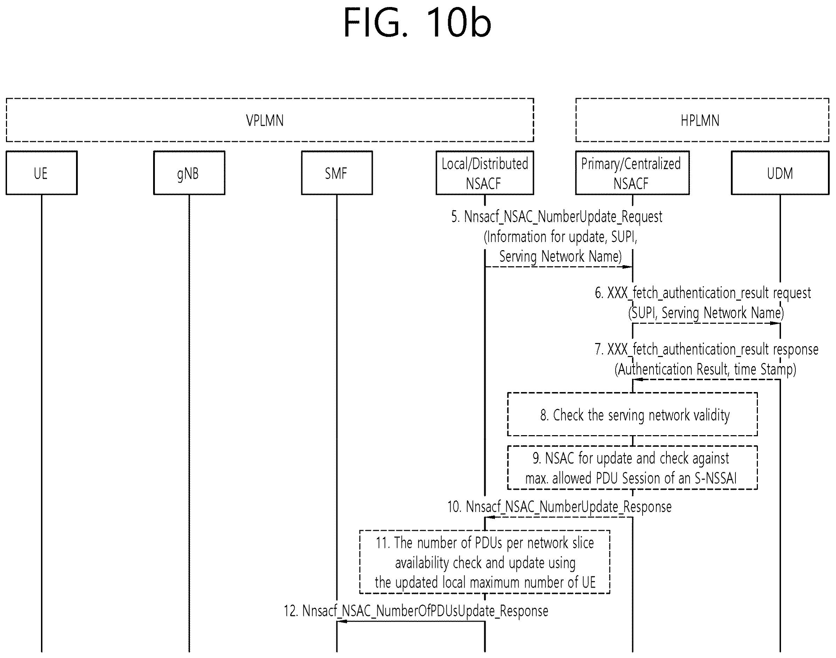

**FIG. 10a** **and** **FIG. 10b** **shows a procedure according to the second embodiment of the disclosure of the present specification.**

FIG. 10a and FIG. 10b shows an example of NSAC verification of the maximum number of PDU sessions over a Link increased home control in a roaming scenario.

0. The SMF managing the PDU sessions may trigger the NSAC procedure to update the number of PDU sessions per network slice. When the initial stage of the PDU session establishment procedure to create a new PDU session or the PDU session release procedure to delete an existing PDU session is completed, the NSAC procedure may be initiated based on the step 1.
1. After the SMF residing in the VPLMN has verified the availability of the number of PDU sessions per S-NSSAI, if it determines that an update to the network slice subject to NSAC is required, it may attempt to update the network slice. By checking the availability of the number of PDU sessions of the network slice for the PDU session managed by the SMF, it may be determined that an update to the network slice is necessary. The update procedure for the network slice may then be performed.
2. the SMF may send the Nnsacf_NSAC_NumOfPDUsUpdate_Request message to the Local/Distributed NSACF. The Nnsacf_NSAC_NumOfPDUsUpdate_Request message may contain the UE ID, serving AMF information, PDU session ID, S-NSSAI, and an update flag indicating whether to increase/decrease or update the number of PDU sessions established with that S-NSSAI.
3. The local/distributed NSACF may perform NSAC on the received S-NSSAI.
   If the update flag of the received PDU session update request is increase, it may not be possible to update the UE entry when the maximum number of local PDU sessions in the network slice is reached. In this case, the Local/distributed NSACF may perform NSAC by interacting with the Primary/Centralized NSACF as described later in the procedure.
4. If there is no information about the primary/centralized NSACF with which it previously interacted, the local/distributed NSACF may find the instance through the NRF or local configuration. The local/distributed NSACF may find the Primary/Centralized NSACF based on the NRF or local configuration.
5. The Local/Distributed NSACF may send the Nnsacf_NSAC_NumberUpdate_Request to the Primary/Centralized NSACF. The Local/Distributed NSACF may send the Nnsacf_NSAC_NumberUpdate_Request(received from the SMF in step 2) to the Primary/Centralized NSACF.
   The Local/Distributed NSACF may further include serving network name or information that identifies the serving PLMN (e.g., PLMN ID, SNPN ID) and terminal location information (e.g., AMF ID, etc.) in the Nnsacf_NSAC_NumberOfUEsUpdate Request.
6. The Primary/Centralized NSACF may request the UDM for a record of the terminal's recent authentication for the serving network.
   The Primary/Centralized NSACF may find the UDM instance through the NRF or local configuration. The Primary/Centralized NSACF may then send the SUPI, the serving network name or information that identifies the serving Public Land Mobile Network (PLMN) (e.g., PLMN ID, SNPN ID), and terminal location information (e.g., AMF ID, etc.) to the UDM to request the terminal's recent authentication history for the corresponding serving network.
7. If there is a matching serving network, the UDM may send the authentication result and time stamp of the terminal to the Primary/Centralized NSACF.
   Primary Authentication may be performed during the terminal's registration process. As soon as the above Primary Authentication is completed, the UDM may store the authentication results and records for the terminal.
8. The Primary/Centralized NSACF may verify the validity of the serving network.
   Based on the information obtained from the UDM, the Primary/Centralized NSACF may decide whether to consider the serving network as a trusted serving network. The judgment criteria may be set differently for each operator. (e.g., if the serving network has an authentication history of 10 minutes ago or within 10 minutes, it is considered a trusted network / valid request)
   If it is determined to be an untrusted serving network/invalid request, step 9 may be skipped and step 10 may be performed.
9. Primary/Centralized NSACF may check the global maximum number of PDU sessions per network slice.

Primary NSACF may manage multiple local NSACFs. The local NSACF may manage the local maximum number of PDU sessions (in the first embodiment, registered UEs). The aggregate of the local maximum numbers of multiple local NSACFs may be the global maximum PDU session number per network slice. In other words, Primary NSACF may manage PDU sessions up to the global maximum number of PDU sessions per network slice.

Based on the results of checking, it may be determined whether to increase the maximum number of PDU sessions per network slice for Local/Distributed NSACF.

Primary/Centralized NSACF may determine whether to approve or reject the increase/decrease indicated in the update flag included in Nnsacf_NSAC_NumberUpdate_Request.

If the update flag included in Nnsacf_NSAC_NumberUpdate_Request is increase, , the Primary/Centralized NSACF may indicate, to the Local/Distributed NSACF, that it rejects the update flag (increase ) included in Nnsacf_NSAC_NumberUpdate_Request if the Primary/Centralized NSACF determines that the corresponding network slice cannot accommodate any more PDU sessions.

10. Primary/Centralized NSACF may send Nnsacf_NSAC_NumberUpdate_response to Local/Distributed NSACF.

If Primary/Centralized NSACF decides to increase the number of PDU sessions for Local/Distributed NSACF, Nnsacf_NSAC_NumberUpdate_response may include the newly allocated local maximum number of PDU sessions. If not, Nnsacf_NSAC_NumberUpdate_response may contain the reason.

If the serving network is determined to be an unreliable serving network in step 8, Primary/Centralized NSACF may send, to the NSACF, Nnsacf_NSAC_NumberUpdate_response including the reason for being an unreliable serving network. In this case, Primary/Centralized NSACF may not update the quota of Local/Distributed NSACF.

11. If the maximum number of new PDU sessions is provided in step 10, Local/Distributed NSACF may replace the previous maximum number of PDU sessions with the newly allocated maximum number of PDU sessions. If the local maximum PDU session number increases due to the maximum number update, Local/Distributed NSACF may create an associated PDU session ID in the UE entry.

12. Local/Distributed NSACF may send Nnsacf_NSAC_NumOfPDUsUpdate_Response message to SMF.

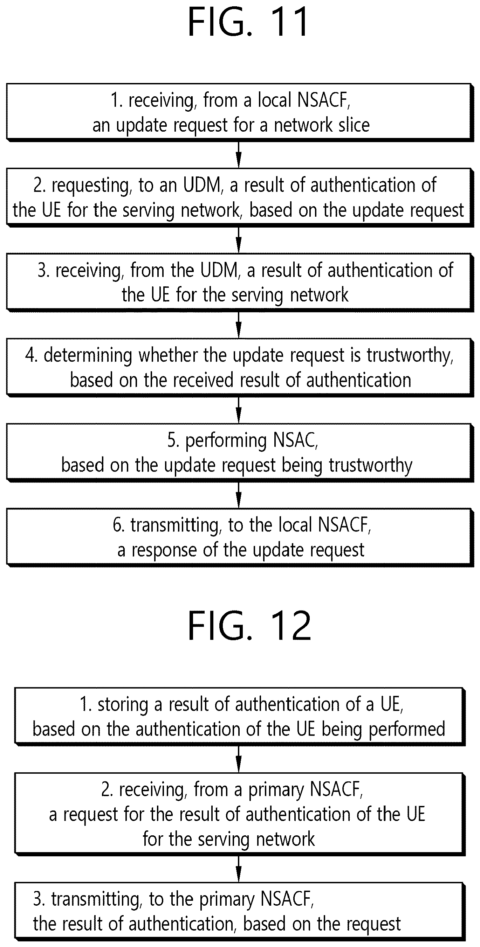

**FIG. 11** **shows the procedure of the primary NSACF according to the disclosure of the present specification.**
1. The primary NSACF may receive, from a local NSACF, an update request for a network slice.
   The update request may include ID of a UE (User Equipment), information on the network slice, information on a serving network for the UE and an update flag.
2. The primary NSACF may request, to an UDM (Unified Data Management), a result of authentication of the UE for the serving network, based on the update request.
3. The primary NSACF may receive, from the UDM, a result of authentication of the UE for the serving network.
4. The primary NSACF may determine whether the update request is trustworthy, based on the received result of authentication.
5. The primary NSACF may perform NSAC (Network Slice Admission Control), based on the update request being trustworthy.
6. The primary NSACF may transmit, to the local NSACF, a response of the update request.

The response of the update request may include a result of the NSAC, based on the update request being trustworthy.

The update flag may include information on requesting to increase or decrease a maximum number of registered UEs that the local NSACF can manage for the network slice.

The NSAC may comprise step of increasing or decreasing the maximum number of registered UEs, based on the update request being trustworthy.

The response of the update request may include the increased maximum number of registered UEs or the decreased maximum number of registered UEs.

The update request may be based on registration procedure, deregistration procedure or configuration update procedure for the UE.

The update flag may include information on requesting to increase or decrease a maximum number of PDU (Protocol Data Unit) sessions that the local NSACF can manage for the network slice.

The NSAC may comprise step of increasing or decreasing the maximum number of PDU sessions, based on the update request being trustworthy.

The response of the update request may include the increased maximum number of PDU sessions or the decreased maximum number of PDU sessions.

The update request may be based on PDU session establishment procedure or PDU session deregistration procedure for the UE.

The response of the update request may include information on determination that the update request not being trustworthy.

The information on the serving network may include ID of PLMN (Public Land Mobile Network) for the UE.

The result of authentication of the UE may include the time when the UE was authenticated.

**FIG. 12** **shows the procedure of the UDM according to the disclosure of the present specification.**
1. The UDM may store a result of authentication of a UE (User Equipment), based on the authentication of the UE being performed.
   The UE may be roaming in a serving network.
2. The UDM may receive, from a primary NSACF (Network Slice Admission Control Function), a request for the result of authentication of the UE for the serving network.
   The request may include information on the serving network.
3. The UDM may transmit, to the primary NSACF, the result of authentication, based on the request.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: receiving, from a local NSACF, an update request for a network slice; wherein the update request includes ID of a UE, information on the network slice, information on a serving network for the UE and an update flag, requesting, to an UDM, a result of authentication of the UE for the serving network, based on the update request; receiving, from the UDM, a result of authentication of the UE for the serving network; determining whether the update request is trustworthy, based on the received result of authentication; performing NSAC, based on the update request being trustworthy; transmitting, to the local NSACF, a response of the update request, wherein the response of the update request includes a result of the NSAC, based on the update request being trustworthy.

Hereinafter, a processor for providing communication according to some embodiments of the present specification will be described.

The processor is configured to: receiving, from a local NSACF, an update request for a network slice; wherein the update request includes ID of a UE, information on the network slice, information on a serving network for the UE and an update flag, requesting, to an UDM, a result of authentication of the UE for the serving network, based on the update request; receiving, from the UDM, a result of authentication of the UE for the serving network; determining whether the update request is trustworthy, based on the received result of authentication; performing NSAC, based on the update request being trustworthy; transmitting, to the local NSACF, a response of the update request, wherein the response of the update request includes a result of the NSAC, based on the update request being trustworthy.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a local NSACF, an update request for a network slice; wherein the update request includes ID of a UE, information on the network slice, information on a serving network for the UE and an update flag, requesting, to an UDM, a result of authentication of the UE for the serving network, based on the update request; receiving, from the UDM, a result of authentication of the UE for the serving network; determining whether the update request is trustworthy, based on the received result of authentication; performing NSAC, based on the update request being trustworthy; transmitting, to the local NSACF, a response of the update request, wherein the response of the update request includes a result of the NSAC, based on the update request being trustworthy.

The present specification may have various effects.

For example, the security of the NSAC procedure can be further strengthened by processing the update request by determining the reliability for request of the NSACF of the lower layer.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a primary NSACF (Network Slice Admission Control Function), comprising:
receiving, from a local NSACF, an update request for a network slice;
wherein the update request includes ID of a UE (User Equipment), information on the network slice, information on a serving network for the UE and an update flag,
requesting, to an UDM (Unified Data Management), a result of authentication of the UE for the serving network, based on the update request;
receiving, from the UDM, a result of authentication of the UE for the serving network;
determining whether the update request is trustworthy, based on the received result of authentication;
performing NSAC (Network Slice Admission Control), based on the update request being trustworthy;
transmitting, to the local NSACF, a response of the update request,
wherein the response of the update request includes a result of the NSAC, based on the update request being trustworthy.

2. The method of claim 1,
wherein the update flag includes information on requesting to increase or decrease a maximum number of registered UEs that the local NSACF can manage for the network slice,
wherein the NSAC comprises step of increasing or decreasing the maximum number of registered UEs, based on the update request being trustworthy,
wherein the response of the update request includes the increased maximum number of registered UEs or the decreased maximum number of registered UEs.

3. The method of claim 2,
wherein the update request is based on registration procedure, deregistration procedure or configuration update procedure for the UE.

4. The method of claim 1,
wherein the update flag includes information on requesting to increase or decrease a maximum number of PDU (Protocol Data Unit) sessions that the local NSACF can manage for the network slice,
wherein the NSAC comprises step of increasing or decreasing the maximum number of PDU sessions, based on the update request being trustworthy,
wherein the response of the update request includes the increased maximum number of PDU sessions or the decreased maximum number of PDU sessions.

5. The method of claim 4,
wherein the update request is based on PDU session establishment procedure or PDU session deregistration procedure for the UE.

6. The method of claims 1 to 5,
wherein the response of the update request includes information on determination that the update request not being trustworthy.

7. The method of any one of claims 1 to 6,
wherein the information on the serving network includes ID of PLMN (Public Land Mobile Network) for the UE.

8. The method of any one of claims 1 to 7,
wherein the result of authentication of the UE includes the time when the UE was authenticated.

9. A primary NSACF (Network Slice Admission Control Function), to perform communication, comprising:
a transceiver; and
a processor,
wherein the processor performs operation comprising:
receiving, from a local NSACF, an update request for a network slice;
wherein the update request includes ID of a UE (User Equipment), information on the network slice, information on a serving network for the UE and an update flag,
requesting, to an UDM (Unified Data Management), a result of authentication of the UE for the serving network, based on the update request;
receiving, from the UDM, a result of authentication of the UE for the serving network;
determining whether the update request is trustworthy, based on the received result of authentication;
performing NSAC (Network Slice Admission Control), based on the update request being trustworthy;
transmitting, to the local NSACF, a response of the update request,
wherein the response of the update request includes a result of the NSAC, based on the update request being trustworthy.

10. The primary NSACF of claim 9,
wherein the update flag includes information on requesting to increase or decrease a maximum number of registered UEs that the local NSACF can manage for the network slice,
wherein the NSAC comprises step of increasing or decreasing the maximum number of registered UEs, based on the update request being trustworthy,
wherein the response of the update request includes the increased maximum number of registered UEs or the decreased maximum number of registered UEs.

11. The primary NSACF of claim 10,
wherein the update request is based on registration procedure, deregistration procedure or configuration update procedure for the UE.

12. The primary NSACF of claim 9,
wherein the update flag includes information on requesting to increase or decrease a maximum number of PDU (Protocol Data Unit) sessions that the local NSACF can manage for the network slice,
wherein the NSAC comprises step of increasing or decreasing the maximum number of PDU sessions, based on the update request being trustworthy,
wherein the response of the update request includes the increased maximum number of PDU sessions or the decreased maximum number of PDU sessions.

13. The primary NSACF of claim 12,
wherein the update request is based on PDU session establishment procedure or PDU session deregistration procedure for the UE.

14. The primary NSACF of claims 8 to 13,
wherein the response of the update request includes information on determination that the update request not being trustworthy.

15. The primary NSACF of any one of claims 9 to 14,
wherein the information on the serving network includes ID of PLMN (Public Land Mobile Network) for the UE.

16. The primary NSACF of any one of claims 9 to 15,
wherein the result of authentication of the UE includes the time when the UE was authenticated.

17. A method for performing communication, performed by an UDM (Unified Data Management), comprising:
storing a result of authentication of a UE (User Equipment), based on the authentication of the UE being performed;
wherein the UE is roaming in a serving network,
receiving, from a primary NSACF (Network Slice Admission Control Function), a request for the result of authentication of the UE for the serving network;
wherein the request includes information on the serving network,
transmitting, to the primary NSACF, the result of authentication, based on the request.

18. An UDM (Unified Data Management), to perform communication, comprising:
a transceiver; and
a processor,
wherein the processor performs operation comprising:
storing a result of authentication of a UE (User Equipment), based on the authentication of the UE being performed;
wherein the UE is roaming in a serving network,
receiving, from a primary NSACF (Network Slice Admission Control Function), a request for the result of authentication of the UE for the serving network;
wherein the request includes information on the serving network,
transmitting, to the primary NSACF, the result of authentication.

19. An apparatus in mobile communication, comprising:
at least one processor; and
at least one memory storing instructions and operably electrically connectable with the at least one processor,
wherein, based on the instructions being operated by the at least one processor, the instructions perform operation that is a method of any one of the claims 1 to 8.

20. A non-volatile computer readable storage medium having recorded instructions,
wherein the instructions, based on being executed by one or more processors, cause the one or more processors to perform operation that is a method of any one of the claims 1 to 8.
